# EUROPÄISCHE PATENTANMELDUNG

(11) **EP 2 570 220 A2**
(43) Veröffentlichungstag der Anmeldung: **20.03.2013**
(21) Anmeldenummer: 12006329.2
(22) Anmeldetag: 07.09.2012
(51) Int. Cl.: B23F 23/12

(54) **Innenverzahnungsschleifmaschine**

(30) Priorität: 15.09.2011 DE 102011113486
(71) Anmelder: LIEBHERR-VERZAHNTECHNIK GmbH, 87437 Kempten (DE)
(72) Erfinder: Hörner, Christian, 87452 Altusried (DE)
(74) Vertreter: Laufhütte, Dieter

(57) **Zusammenfassung**

Die vorliegende Erfindung betrifft eine Innenverzahnungsschleifmaschine mit einem Schleifarm (1), an welchem eine Schleifspindel (2) angeordnet ist, und mit Messkopf (4), wobei der Messkopf (4) vorteilhafterweise einen Messtaster umfasst. Darüber hinaus ist der Messkopf (4) erfindungsgemäß über eine Linearführung (7) aus einer Schleifposition in eine Messposition verfahrbar.

## Beschreibung

Die vorliegende Erfindung betrifft eine Innenverzahnungsschleifmaschine mit einem Schleifarm, an welchem eine Schleifspindel angeordnet ist, und mit einem Messkopf, wobei der Messkopf vorteilhafterweise einen Messtaster umfasst.

Bei Außenverzahnungsschleifmaschinen ist dabei bekannt, den Messkopf am Schleifkopf neben der Schleifspindel an einer Linearführung anzuordnen, über welchen der Messkopf in Richtung der Schleifspindeldrehachse zu der Schleifscheibe hin in eine Messposition und von der Schleifscheibe weg in eine Parkposition verfahren werden kann. Eine solche Anordnung des Messkopfes ist bei Innenverzahnungsschleifmaschinen jedoch nicht möglich, da der Messkopf zur Bearbeitung eines Werkstückes nicht im Bereich neben der Schleifscheibe verbleiben kann.

Daher wird der Messkopf bei Innenverzahnungsschleifmaschinen üblicherweise entweder nur zur Durchführung einer Messung am Schleifkopf angesteckt und zum Bearbeiten eines Werkstücks wieder entfernt, oder er ist unterhalb der Schleifscheibe drehbar am Schleifkopf angeordnet und wird in eine Messposition nach vorne geklappt.

Aufgabe der vorliegenden Erfindung ist es, eine Innenverzahnungsschleifmaschine zur Verfügung zu stellen, welche demgegenüber eine vereinfachte Handhabung des Messkopfes erlaubt.

Erfindungsgemäß wird diese Aufgabe durch eine Innenverzahnungschleifmaschine gemäß Anspruch 1 gelöst.

Die erfindungsgemäße Innenverzahnungsschleifmaschine weist dabei einen Schleifarm auf, an welchem eine Schleifspindel angeordnet ist. Weiterhin ist ein Messkopf vorgesehen. Vorteilhafterweise umfasst der Messkopf dabei einen Messtaster. Erfindungsgemäß ist der Messkopf dabei über eine Linearführung aus einer Parkposition in eine Messposition verfahrbar. Die vorliegende Erfindung erlaubt es damit, zur Durchführung einer Messung den Messkopf in seine Messposition zu verfahren, in welcher er vorteilhafterweise im Bereich der Schleifscheibe angeordnet ist. Soll das Werkstück dagegen bearbeitet werden, kann der Messkopf aus dieser Störposition wieder zurück in die Parkposition verfahren werden.

Die erfindungsgemäße Ausführung der Innenverzahnungsschleifmaschine hat dabei den Vorteil, dass der Messkopf nicht aufwendig montiert oder demontiert werden muss. Vielmehr kann der Messkopf einfach über die Linearführung in seine Messposition verfahren werden. Zum Messen muss daher erfindungsgemäß die Schleifscheibe lediglich in Eingriffsrichtung aus der Verzahnung heraus verfahren werden und der Messkopf in seine Messposition gebracht werden. Zum Schleifen wird der Messkopf dann zurück in seine Parkposition bewegt und die Schleifscheibe in Eingriffsrichtung in die Verzahnung hinein verfahren.

Der Messkopf, insbesondere mit einem Messtaster, kann dabei zum Einmitten oder auch zum Einfädeln der Schleifscheibe in die Verzahnung eingesetzt werden. Weiterhin kann er eingesetzt werden, um das Verzahnungsprofil vor oder nach der Bearbeitung zu messen. Der Messkopf kann hierfür in seine Messposition verfahren und dann über die Bewegungsachsen der Schleifmaschine gegen die Innenverzahnung bewegt werden, um so das Profil des Werkstücks zu bestimmen. Insbesondere wird der Messkopf dabei über die gleichen Bewegungsachsen der Schleifmaschine bewegt, über welche auch die Schleifspindel bewegbar ist.

In vorteilhafter Weise ist der Messkopf dabei erfindungsgemäß orthogonal zur Schleifspindeldrehachse verfahrbar. Anders als die bei Außenverzahnungsschleifmaschinen bekannte Verfahrbarkeit in Richtung der Schleifspindeldrehachse erlaubt diese Anordnung der Linearführung bei der Innenverzahnungsschleifmaschine, den Messkopf aus dem Störbereich wegzuverfahren.

Bei der erfindungsgemäßen Innenverzahnungsschleifmaschine ist die Schleifspindel an einem Schleifarm angeordnet, über welchen sie in Eintauchrichtung in das Werkstuck hineingefahren werden kann, um von Innen die Innenverzahnung des Werkstücks zu bearbeiten. Der Schleifarm erstreckt sich daher in Eintauchrichtung und definiert durch seine Länge die maximal mögliche Breite des Zahnrads, welche mit der Innenverzahnungsschleifmaschine geschliffen werden kann.

In weiterhin vorteilhafter Weise ist dabei vorgesehen, dass der Messkopf in Eintauchrichtung verfahrbar ist. In dieser Richtung ist auch bei einer Innenverzahnungsschleifmaschine üblicherweise relativ viel Bauraum, so dass trotz der beengten Platzverhältnisse eine entsprechende Linearführung vorgesehen werden kann.

Weiterhin vorteilhafterweise ist die Linearführung erfindungsgemäß am Schleifarm angeordnet. Insbesondere wenn der Messkopf in Eintauchrichtung verfahrbar ist, kann so der sich in diese Richtung erstreckende Schleifarm als Bauraum für die Linearführung genutzt werden.

Insbesondere kann die Linearführung dabei auf der dem Innenverzahnungsbereich zugewandten Seite des Schleifarmes angeordnet sein. Hierdurch kann der Messkopf problemlos an die Innenverzahnung des Werkstücks, welche vermessen werden soll, herangefahren werden.

Vorteilhafterweise ist die Linearführung dabei in Eintauchrichtung oberhalb der Schleifspindel angeordnet. Anders als bei unterhalb der Schleifspindel angeordneten Messtastern wird so durch den Messtaster kein zusätzlicher Bauraum benötigt. Insbesondere kann sich die Linearführung so am Schleifarm in Eintauchrichtung erstrecken, wo durch die notwendige Länge des Schleifarms ohnehin ein gewisser Bauraum zur Verfügung steht.

Vorteilhafterweise ist die Linearführung dabei an einem Element des Schleifarms angeordnet, welches sich über einer an der Schleifspindel angeordneten Schleifscheibe befindet. Insbesondere kann die Linearführung dabei in der Schleifebene der Schleifspindel angeordnet sein.

In weiterhin vorteilhafter Weise ist die Linearführung dabei gegenüber der vorderen Störkante der Schleifspindelaufhängung in Eingriffsrichtung zurückversetzt oder auf gleicher Ebene angeordnet. Die Linearführung selbst vergrößert so nicht die Störkanten am Schleifarm.

In weiterhin vorteilhafter Weise ist der Messkopf an einem Trägerarm angeordnet, welcher an der Linearführung geführt ist. Die Linearführung muss so nicht bis zur Messposition des Messkopfes reichen, sondern das Ende der Linearführung kann entfernt von der Messposition des Messkopfes angeordnet sein. Vorteilhafterweise kann der Messkopf dabei durch die Form des Trägerarms vor eine an der Schleifspindel angeordnete Schleifscheibe verfahrbar sein.

Vorteilhafterweise kragt der Trägerarm über das Ende der Linearführung in Verschieberichtung hinaus und steht von der Linearführung ab, wobei an seinem Ende vorteilhafterweise der Messkopf angeordnet ist. Insbesondere erlaubt es der Trägerarm dabei durch seine Form, den Messkopf in der Schleifebene vor eine Schleifscheibe zu verfahren.

Insbesondere erstreckt sich der Trägerarm dabei nach vorne und nach unten in eine Position vor der Schleifscheibe.

Weiterhin kann vorgesehen sein, dass der Messkopf an einem Messkopfschlitten angeordnet ist, welcher an der Linearführung verfahrbar ist. Insbesondere kann dabei am Messkopfschlitten ein Trägerarm vorgesehen sein, wie dies bereits oben beschrieben wurde.

Vorteilhafterweise ist der Messkopfschlitten dabei in der Parkposition zumindest teilweise in einem Gehäuse angeordnet und kann über die Linearführung aus diesem in die Messposition ausgefahren werden. Hierdurch kann der Messkopfschlitten aus der Messposition und aus dem Störbereich heraus in das Gehäuse verfahren werden, welches gleichzeitig zum Schutz des Messkopfschlittens und des Messkopfes dient. Weiterhin kann das Gehäuse eine tragende Funktion für den Schleifarm aufweisen und/oder ohnehin vorhanden sein und nun auch für den Messkopfschlitten genutzt werden.

Vorteilhafterweise ist der Messkopfschlitten dabei komplett in das Gehäuse einfahrbar, vorteilhafterweise so, dass auch der Trägerarm und/oder der Messkopf selbst in der Parkposition im Gehäuse angeordnet ist.

Vorteilhafterweise ist das Gehäuse dabei oberhalb der Schleifscheibe angeordnet.

Weiterhin kann vorgesehen sein, dass das Gehäuse in einem Teil des Schleifarms angeordnet ist, welcher der Anbindung an die Verzahnschleifmaschine dient.

Insbesondere kann dabei vorgesehen sein, dass der Schleifarm in horizontaler Richtung über einen Gehäuseabschnitt mit einem Schleifarmständer in Verbindung steht, welcher sich bei der Bearbeitung eines Werkstückes über das Werkstück hinaus nach außen erstreckt. Erfindungsgemäß kann dabei vorgesehen sein, dass der Messkopfschlitten in diesen Gehäuseabschnitt einfahrbar ist. Vorteilhafterweise weist dieser Gehäuseabschnitt dabei eine tragende Funktion für den Schleifarm auf.

Weiterhin kann erfindungsgemäß vorgesehen sein, dass der Messkopf über einen Antrieb entlang der Linearführung verfahrbar ist. Insbesondere kann dabei vorgesehen sein, dass der Antrieb über die Maschinensteuerung angesteuert wird, so dass der Messkopfschlitten automatisch verfahren werden kann.

Weiterhin kann vorgesehen sein, dass der Antrieb pneumatisch erfolgt.

Alternativ ist jedoch ebenfalls denkbar, dass der Messkopf manuell verfahren werden muss.

Weiterhin kann bei der erfindungsgemäßen Innenverzahnungsschleifmaschine die Messposition des Messkopfes über einen Endanschlag definiert sein, gegen welchen der Messkopfschlitten fahrbar ist. Hierdurch wird erreicht, dass die Position des Messkopfes in der Messposition exakt definiert ist, was korrekte Messergebnisse gewährleistet.

Vorteilhafterweise ist dabei ein Anlagekontrollsensor vorgesehen, welcher überprüft, dass der Messkopfschlitten sich tatsächlich in der Endlage befindet. Dabei kann vorteilhafterweise ein pneumatischer Anlagekontrollsensor eingesetzt werden.

Die vorliegende Erfindung kommt besonders bevorzugt bei Innenverzahnungsschleifmaschinen zum Einsatz, bei welchem die Schleifspindel ohne die Zwischenschaltung einer Drehachse am Schleifarm angeordnet ist. Alternativ oder zusätzlich kann die Schleifspindel ohne die Zwischenschaltung einer Shiftachse am Schleifarm angeordnet sein. Weiterhin alternativ oder zusätzlich kann die Schleifspindel ohne die Zwischenschaltung einer in Eintauchrichtung verlaufenden Achse am Schleifarm angeordnet sein.

Insbesondere kann dabei vorgesehen sein, dass sämtliche Bewegungen der Schleifspindel bis auf deren Rotationsbewegung durch eine Bewegung des Schleifarms erfolgen, während die Schleifspindel selbst starr am Schleifarm angeordnet ist.

Weiterhin kann dabei vorgesehen sein, dass der Schleifarm über Achsen bewegbar ist, welche außerhalb des Radius eines zu bearbeitenden Werkstücks angeordnet sind.

Weiterhin kann vorgesehen sein, dass der Schleifarm über eine Drehachse drehbar ist. Weiterhin kann vorgesehen sein, dass der Schleifarm über eine erste Linearachse in Eintauchrichtung bewegbar ist. Weiterhin kann vorgesehen sein, dass der Schleifarm über eine Shiftachse in Richtung der Drehachse der Schleifspindel verfahrbar ist. Weiterhin kann vorgesehen sein, dass der Schleifarm über eine Linearachse in Eingriffsrichtung bewegbar ist.

Gemäß einem weiteren Aspekt umfasst die vorliegende Erfindung eine Verzahnungsschleifmaschine mit einer Schleifspindel und mit einem über eine Linearführung verfahrbaren Messkopf. Vorteilhafterweise umfasst der Messkopf dabei wiederum einen Messtaster. Gemäß diesem Aspekt der Erfindung ist die Verzahnungsschleifmaschine dadurch gekennzeichnet, dass der Messkopf orthogonal zur Schleifspindeldrehachse verfahrbar ist. Diese Anordnung einer Linearführung orthogonal zur Schleifspindeldrehachse hat dabei nicht nur bei Innenverzahnungsschleifmaschinen, sondern auch bei Außenverzahnungsschleifmaschinen Vorteile beim Anordnen des Messkopfes. Bevorzugt ist der Messkopf dabei in Eintauchrichtung verfahrbar.

In vorteilhafter Weise weist die Verzahnungsschleifmaschine dabei die bevorzugten Merkmale auf, welche oben im Hinblick auf die erfindungsgemäße Innenverzahnungsschleifmaschine beschrieben wurden, ohne dass sich diese auf die Ausführung einer Innenverzahnungsschleifmaschine beziehen müssen. Insbesondere kann die Linearführung dabei in Eintauchrichtung oberhalb der Schleifspindel angeordnet sein. Weiterhin kann vorgesehen sein, dass die Linearführung gegenüber der vordersten Störkante der Schleifspindelaufhängung in Eingriffsrichtung zurückversetzt oder auf gleicher Ebene liegt. Weiterhin kann vorgesehen sein, dass die Linearführung in etwa in der Schleifebene angeordnet ist.

Weiterhin kann der Messkopf an einem Trägerarm angeordnet sein, welcher an einer Linearführung geführt ist. Vorteilhafterweise ist der Messkopf dabei durch die Form des Trägerarm vor eine an der Schleifspindel angeordnete Schleifscheibe fahrbar.

Weiterhin kann der Messkopf an einem Messkopfschlitten angeordnet sein, insbesondere an einem Messkopfschlitten mit einem Trägerarm, wie er oben beschrieben wurde.

Der Messkopfschlitten kann weiterhin in der Parkposition zumindest teilweise und vorteilhafterweise komplett in einem Gehäuse angeordnet sein und über die Linearführung aus diesem in die Messposition ausfahrbar sein. Insbesondere kann das Gehäuse dabei oberhalb der Schleifscheibe angeordnet sein.

Weiterhin kann der Messkopf über einen Antrieb an der Linearführung verfahrbar sein, wobei der Antrieb vorteilhafterweise pneumatisch erfolgt und/oder wobei der Antrieb vorteilhafterweise über die Maschinensteuerung angesteuert wird.

Weiterhin kann vorgesehen sein, dass die Messposition des Messkopfes über einen Endanschlag definiert wird, gegen welchen der Messkopfschlitten fahrbar ist. Vorteilhafterweise ist dabei ein Anlagekontrollsensor vorgesehen, vorteilhafterweise ein pneumatischer Anlagekontrollsensor.

In vorteilhafter Weise ist die Linearführung dabei am Schleifkopf der Verzahnungsschleifmaschine angeordnet, ohne dass zwischen dem Element, an welchem die Linearführung angeordnet ist, und der Schleifspindel eine Bewegungsachse angeordnet wäre.

Bei der gemäß dem weiteren Aspekt der vorliegenden Erfindung beschriebenen Verzahnungsschleifmaschine kann es sich insbesondere um eine Innenverzahnungsschleifmaschine handeln, wie sie oben dargestellt wurde. Alternativ kann es sich jedoch auch um eine Außenverzahnungsschleifmaschine handeln.

Die erfindungsgemäßen Innenverzahnungsschleifmaschinen können dabei entweder mit einem speziellen Innenschleifkopf ausgerüstet sein, oder sie können einen als Aufsatzschleifkopf ausgeführten Schleifarm aufweisen, welcher auf einem auch für Außenverzahnungen einsetzbaren Maschinenständer angebaut wird.

Die erfindungsgemäßen Innenverzahnungsschleifmaschinen und Verzahnungsschleifmaschinen umfassen vorteilhafterweise eine Werkstückauflage, an welcher das Werkstück eingespannt und durch einen Antrieb gedreht werden kann, so dass der Schleifkopf der Schleifmaschine mit unterschiedlichen Bereichen des Werkstückes in Eingriff kommen kann.

Vorteilhafterweise werden die Bewegungsachsen der erfindungsgemäßen Innenverzahnungsschleifmaschinen und Verzahnungsschleifmaschinen über NC-Achsen und eine Schleifmaschinensteuerung gesteuert. Vorteilhafterweise steht dabei auch der Messkopf mit der Schleifmaschinensteuerung in Verbindung.

Neben der Innenverzahnungsschleifmaschine und der Verzahnungsschleifmaschine selbst umfasst die vorliegende Erfindung weiterhin einen Messtasterschlitten und eine Linearführung für eine solche Verzahnungsschleifmaschine bzw. eine solche Innenverzahnungsschleifmaschine.

Insbesondere ist dabei der Messkopf an einem Trägerarm angeordnet, welcher über den Messkopfschlitten an der Linearführung geführt ist. Vorteilhafterweise kragt der Trägerarm dabei über das Ende der Linearführung in Verschieberichtung hinaus und steht von der Linearführung ab, wobei an seinem Ende vorteilhafterweise der Messkopf angeordnet ist. Insbesondere erlaubt es der Trägerarm dabei durch seine Form, den Messkopf in der Schleifebene vor eine Schleifscheibe zu verfahren.

Die vorliegende Erfindung wird nun anhand von Ausführungsbeispielen sowie Zeichnungen näher beschrieben. Dabei zeigen:
- Figur 1:: ein Ausführungsbeispiel eines Schleifarmes einer erfindungsgemäßen Innenverzahnungsschleifmaschine mit dem Messtaster in einer Messposition,
- Figur 2:: das Ausführungsbeispiel eines Schleifarmes einer erfindungsgemäßen Innenverzahnungsschleifmaschine mit dem Messkopf in der Parkposition,
- Figur 3:: ein Ausführungsbeispiel einer erfindungsgemäßen Innenverzahnungsschleifmaschine mit dem erfindungsgemäßen Schleifarm mit dem Messkopf in einer Messposition und
- Figur 4:: das in Figur 3 gezeigte Ausführungsbeispiel mit dem Messkopf in der Parkposition.

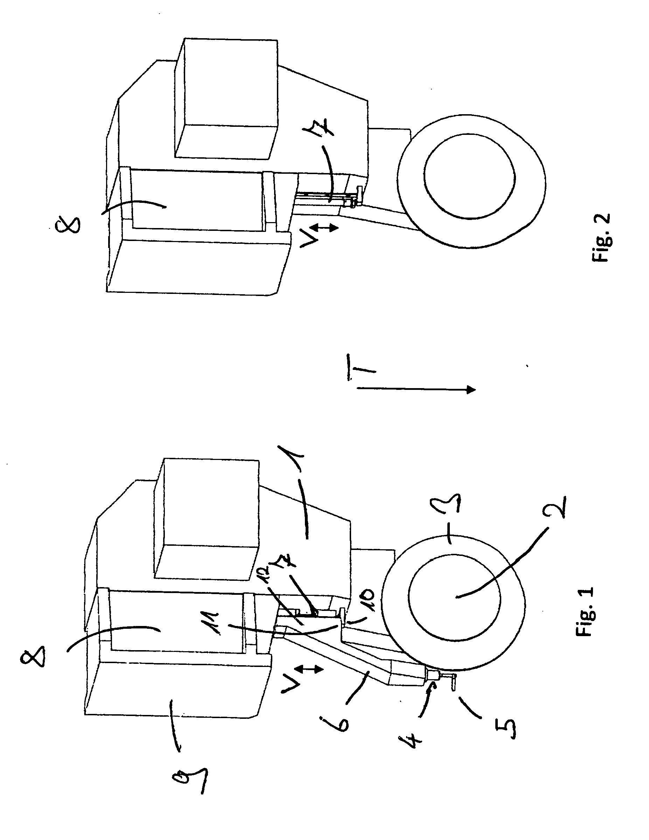

Ein Ausführungsbeispiel der vorliegenden Erfindung soll nun anhand von Figuren 1 und 2 näher beschrieben werden. Die erfindungsgemäße Innenverzahnungsschleifmaschine weist dabei einen Schleifarm 1 auf, an dessen unteren Ende eine Schleifspindel 2 mit der daran angeordneten Schleifscheibe 3 angeordnet ist. Im Ausführungsbeispiel sind dabei unterhalb der Schleifspindel keine weiteren Anbauten vorgesehen, so dass nach unten hin kein Bauraum verschwendet wird.

Der Messkopf 4 weist dabei einen Messtaster auf, welcher durch die Bewegung eines Messfühlers 5 ausgelöst wird. Der Messfühler 5 erstreckt sich dabei nach vorne in Eingriffsrichtung vom Messkopf weg.

Über den erfindungsgemäßen Messkopf kann dabei das Einmitten oder auch das Einfädeln der Schleifscheibe in die Verzahnung eines Werkstückes und/oder das Vermessen der Verzahnung nach oder vor der Bearbeitung vorgenommen werden.

Erfindungsgemäß ist der Messkopf 4 nun auf einem Schlitten 12 angeordnet, welcher entlang einer Linearführung 7 verfahrbar ist. Die Linearführung 7 ist dabei orthogonal zur Schleifscheibendrehachse und parallel zur Eintauchrichtung T in das Werkstück angeordnet.

Der Messkopfschlitten kann so entgegen der Eintauchrichtung des Schleifkopfes aus dem Störbereich heraus in eine Parkposition gefahren werden bzw. in den Störbereich hinein in seine Messposition.

Erfindungsgemäß ist die Linearführung 7 dabei am Schleifarm 1 angeordnet, und zwar im Ausführungsbeispiel oberhalb der Schleifscheibe 3 an einem Bereich des Schleifarms, welcher über der Schleifspindel 2 angeordnet ist. Insbesondere kann die Linearführung 7 dabei in der Schleifebene der Schleifscheibe 3 angeordnet sein.

Der Messkopf 4 sitzt dabei an der Spitze eines Trägerarms 6, welcher den Messkopf 4 mit dem Schlitten 12 verbindet. Der Trägerarm 6 kragt dabei nach vorn und unten vor, so dass er nicht mit der Schleifscheibe 3 in Kontakt kommt und dennoch der Messkopf 4 in der Messposition vor der Schleifscheibe anordnet.

Zum Schleifen kann der Schlitten 12 mit dem Trägerarm 6 dann nach oben aus dem Störbereich heraus verfahren werden. Der Schlitten und der Trägerarm 6 werden dabei in einen Gehäuseabschnitt 8 des Schleifarms hineingefahren, welcher der Verbindung mit dem Maschinenständer dient. Hierdurch kann der dort ohnehin vorhandene Platz optimal genutzt werden.

Erfindungsgemäß muss hierfür lediglich an der Unterseite des Gehäuseabschnitts 8 eine Öffnung vorgesehen werden, durch welche der Schlitten und der Trägerarm nach oben in den Gehäusebereich hineinverfahren werden können. Weiterhin kann sich die Linearführung hierfür bis in den Gehäusebereich hinein erstrecken.

Besonders bevorzugt ist der Messkopfschlitten 12 angetrieben, so dass der Messkopf über die Maschinensteuerung der Verzahnungsschleifmaschine von der Parkposition in die Messposition verfahren werden kann und umgekehrt.

Eine exakt reproduzierbare Endlage des Messkopfschlittens in der Messposition wird dabei durch einen Endanschlag 10 sichergestellt, gegen welchen der Messkopfschlitten 11 verfahrbar ist. Weiterhin ist dort ein pneumatischer Anlagekontrollsensor vorgesehen, welcher die Endlage überprüft.

Auch der Antrieb des Messtasterschlittens kann erfindungsgemäß pneumatisch erfolgen.

Bei dem Ausführungsbeispiel der erfindungsgemäßen Verzahnungsschleifmaschine handelt es sich dabei um eine Verzahnungsschleifmaschine mit einem Schleifarm ohne Bewegungsachsen zur Bewegung der Schleifspindel 2, welche demgemäß starr am Schleifarm 1 angeordnet ist.

Sämtliche Bewegungen, welche zum Schleifen einer Innenverzahnung notwendig sind, außer der Rotationsbewegung für die Schleifscheibe 3, werden demgemäß durch die Bewegung des gesamten Schleifarms 1 durchgeführt. Hierfür ist der Schleifarm mit dem Verbindungselement 9 über nicht dargestellte Bewegungsachsen an einem ebenfalls nicht dargestellten Schleifständer angeordnet. Die Bewegungsachsen und der Schleifständer befinden sich dabei außerhalb des Radius des zu bearbeitenden Werkstücks.

Alternativ kann die vorliegende Erfindung jedoch auch bei Verzahnungsschleifmaschinen eingesetzt werden, welche einen speziellen Innenschleifkopf aufweisen, welcher eigene Bewegungsachsen aufweist.

Insbesondere kann dabei welchem ein Teil des Schleifarms einen Schleifkopf bilden, der gegenüber einem zweiten Teil des Schleifarms durch eine oder mehrere Bewegungsachsen verfahrbar bzw. drehbar ist. Vorteilhafterweise ist in diesem Fall die Linearachse 7 an dem Teil des Schleifarms angeordnet, an welchem die Schleifspindel 2 ohne Zwischenschaltung von Bewegungsachsen angeordnet ist, so dass die Linearachse 7 mit der Schleifspindel 2 mitbewegt wird.

Alternativ könnte die Linearachse 7 jedoch auch an einem Teil des Schleifarms angeordnet sein, gegenüber welchem die Schleifspindel 2 über Bewegungsachsen verfahrbar ist.

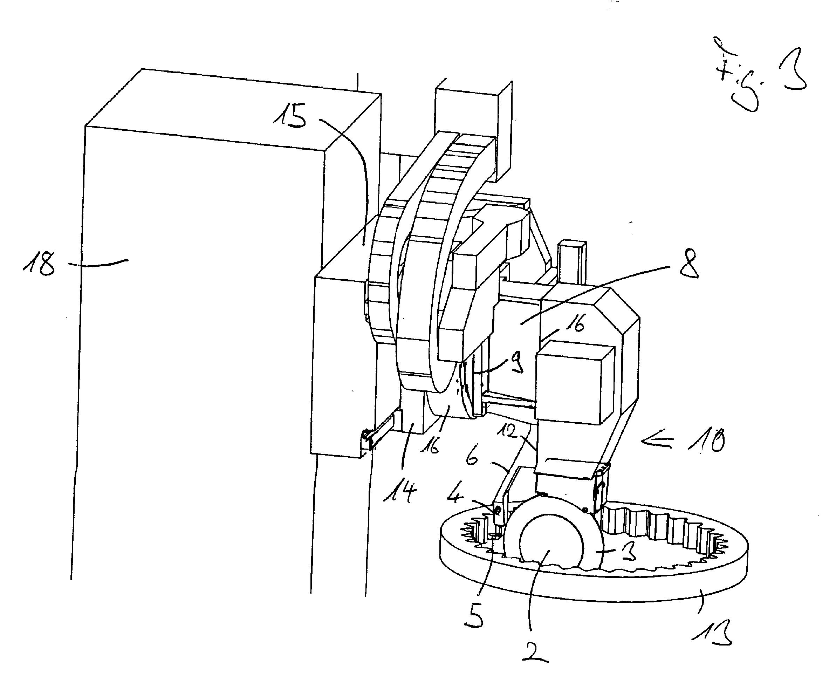

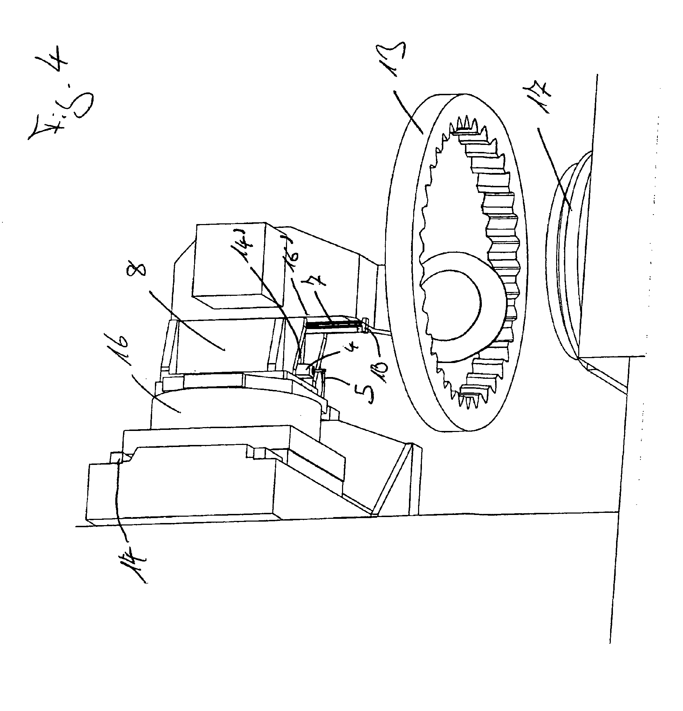

In den Figuren 3 und 4 ist nun ein Ausführungsbeispiel einer Innenverzahnungsschleifmaschine gemäß der vorliegenden Erfindung gezeigt, bei welcher der in Fig. 1 und 2 gezeigte Schleifarm eingesetzt wird.

Dabei sind auch die Bewegungsachsen gezeigt, über welche der Schleifarm 10 bewegt werden kann. Dabei steht der Schleifarm über die Verbindungsfläche 9 zunächst mit einer Drehachse 16 in Verbindung, über welche der gesamte Schleifarm verschwenkt werden kann, um Schrägverzahnungen herzustellen. Weiterhin ist ein Schlitten 14 vorgesehen, welcher ein seitliches Verschieben des Schleifarms in Shiftrichtung ermöglicht. Der Schlitten 15 erlaubt weiter ein Verschieben des Schleifarms in Eintauchrichtung. Weiterhin kann der Schleifarm durch ein Verschieben des Maschinenständers 18 in Eingriffsrichtung bewegt werden, um die Schleifscheibe mit dem Werkstück 13 in Eingriff zu bringen bzw. aus der Verzahnung herauszubewegen. Das Werkstück ist über die Werkstückspindel 17 um eine vertikale Drehachse drehbar. Dabei ist in Figur 3 auch zu erkennen, wie das Werkstück 13 über den Messkopf 4 vermessen wird.

In Fig. 4 ist der Gehäuseabschnitt 8 in einer Ansicht schräg von unten gezeigt, so dass zu erkennen ist, dass dieser mit einer Öffnung 14' ausgestattet wurde, durch welche hindurch der Trägerarm 6 und der Messkopfschlitten 10 nach oben in den Gehäuseabschnitt hinein verfahren werden können. Weiterhin ist zu erkennen, wie die Linearführung 7 am vertikal verlaufenden Schleifarmelement 16' angeordnet ist, welches mit dem Gehäuseabschnitt 8 verbunden ist.

Bei den Figuren 3 und 4 ist auch besonders gut zu erkennen, dass die vorliegende Erfindung einen besonders effizienten Wechsel zwischen Schleifbetrieb und Messbetrieb ermöglicht, da hierzu lediglich die Schleifscheibe 3 etwas aus der Verzahnung herausgefahren werden muss. Dann kann allein durch eine Bewegung des Messkopfes in seine Messposition der Messfühler 5 in die gewünschte Position verfahren werden.

Die Messung erfolgt nun durch eine Bewegung des Schleifarms über die Bewegungsachsen der Maschine, bis der Messfühler 5 jeweils mit der Oberfläche der Verzahnung in Kontakt kommt und hierdurch den Messtaster auslöst.

Auch zur Wiederaufnahme des Schleifbetriebs muss lediglich der Messkopf nach oben aus dem Störbereich heraus verfahren werden, ohne dass der Schleifkopf mit der Schleifscheibe 3 hierfür verfahren werden müsste.

Zudem ist der Messkopf sowie der Trägerarm durch die erfindungsgemäße Anordnung im Schleifbetrieb durch den Gehäuseabschnitt 8, welcher diesen umgibt, geschützt. Für den Fühler 5 kann dabei außen am Gehäuseabschnitt eine Aussparung vorgesehen, in welche dieser hinein gefahren wird.

Alternativ zu der hier gezeigten Ausführung mit einer Innenverzahnungsschleifmaschine könnte der über die Linearachse 7 bewegbare Messkopf 4 in gleicher Weise auch an einer Außenverzahnungsschleifmaschine angeordnet werden. Vorteilhafterweise ist er dabei in gleicher Weise oberhalb der Schleifspindel 2 in Eintauchrichtung verfahrbar am Schleifkopf angeordnet. Die Ausführung von Linearführung 7, Messkopfschlitten 12, Trägerarm 6 und Messkopf 4 kann dabei die gleiche sein wie bei der erfindungsgemäßen Innenverzahnungsschleifmaschine.

Auch hier kann der Messkopf aus seiner Messposition problemlos nach oben weg aus dem Störbereich heraus verfahren werden.

## Patentansprüche

1. Innenverzahnungsschleifmaschine mit einem Schleifarm, an welchem eine Schleifspindel angeordnet ist, und mit Messkopf, wobei der Messkopf vorteilhafterweise einen Messtaster umfasst,
**dadurch gekennzeichnet,**
**dass** der Messkopf über eine Linearführung aus einer Parkposition in eine Messposition verfahrbar ist.

2. Innenverzahnungsschleifmaschine nach Anspruch 1, wobei der Messkopf orthogonal zur Schleifspindeldrehachse verfahrbar ist, wobei der Messkopf vorteilhafterweise in Eintauchrichtung verfahrbar ist.

3. Innenverzahnungsschleifmaschine nach einem der vorangegangenen Ansprüche, wobei die Linearführung am Schleifarm angeordnet ist, insbesondere auf der dem Innenverzahnungsbereich zugewandten Seite des Schleifarmes.

4. Innenverzahnungsschleifmaschine nach einem der vorangegangenen Ansprüche, wobei die Linearführung in Eintauchrichtung oberhalb der Schleifspindel angeordnet ist, wobei die Linearführung vorteilhafterweise an einem Element des Schleifarms angeordnet ist, welches sich über einer an der Schleifspindel angeordneten Schleifscheibe befindet und/oder wobei die Linearführung gegenüber der vordersten Störkante der Schleifspindelaufhängung in Eingriffsrichtung zurückversetzt oder auf gleicher Ebene liegt.

5. Innenverzahnungsschleifmaschine nach einem der vorangegangenen Ansprüche, wobei der Messkopf an einem Trägerarm angeordnet ist, welcher an der Linearführung geführt ist, wobei der Messkopf vorteilhafterweise durch die Form des Trägerarms vor eine an der Schleifspindel angeordnete Schleifscheibe fahrbar ist.

6. Innenverzahnungsschleifmaschine nach einem der vorangegangenen Ansprüche, wobei der Messkopf an einem Messkopfschlitten angeordnet ist, insbesondere einem Messkopfschlitten in Form eines Trägerarms, wobei der Messkopfschlitten vorteilhafterweise in der Parkposition zumindest teilweise und vorteilhafterweise komplett in einem Gehäuse angeordnet ist und über die Linearführung aus diesem in die Messposition ausfahrbar ist, wobei das Gehäuse vorteilhafterweise oberhalb der Schleifscheibe angeordnet ist und/oder wobei das Gehäuse vorteilhafterweise in einem Teil des Schleifarms angeordnet ist, welcher der Anbindung an die Verzahnschleifmaschine dient.

7. Innenverzahnungsschleifmaschine nach einem der vorangegangenen Ansprüche, wobei der Messkopf über einen Antrieb an der Linearführung verfahrbar ist, wobei der Antrieb vorteilhafterweise pneumatisch erfolgt und/oder wobei der Antrieb vorteilhafterweise über die Maschinensteuerung angesteuert wird.

8. Innenverzahnungsschleifmaschine nach einem der vorangegangenen Ansprüche, wobei die Messposition des Messkopfes über einen Endanschlag definiert wird, gegen welchen der Messkopfschlitten fahrbar ist, wobei vorteilhafterweise ein Anlagekontrollsensor vorgesehen ist, vorteilhafterweise ein pneumatischer Anlagekontrollsensor.

9. Innenverzahnungsschleifmaschine nach einem der vorangegangenen Ansprüche, wobei die Schleifspindel ohne die Zwischenschaltung einer Drehachse am Schleifarm angeordnet ist und/oder die wobei die Schleifspindel ohne die Zwischenschaltung einer Shiftachse am Schleifarm angeordnet ist und/oder wobei die Schleifspindel ohne die Zwischenschaltung einer in Eintauchrichtung verlaufenden Achse am Schleifarm angeordnet ist und/oder wobei der Schleifarm über Achsen bewegbar ist, welche außerhalb eines Radius eines zu bearbeitenden Werkstückes angeordnet sind und/oder wobei der Schleifarm über eine Drehachse drehbar ist und/oder über eine erste Linearachse in Eintauchrichtung bewegbar ist und/oder über eine Shiftachse in Richtung der Drehachse der Schleifspindel verfahrbar ist und/oder über eine Linearachse in Eingriffsrichtung verfahrbar ist.

10. Verzahnungsschleifmaschine mit einer Schleifspindel und mit einem mit einem über eine Linearführung bewegbaren Messkopf, wobei der Messkopf vorteilhafterweise einen Messtaster umfasst,
**dadurch gekennzeichnet,**
**dass** der Messkopf orthogonal zur Schleifspindeldrehachse verfahrbar ist, wobei der Messkopf vorteilhafterweise in Eintauchrichtung verfahrbar ist.

11. Verzahnungsschleifmaschine nach Anspruch 10 mit den Merkmalen eines der Ansprüche 4 bis 8.

12. Messtasterschlitten und Linearführung für eine Verzahnungsschleifmaschine, nach Anspruch 10 oder 11 und/oder für eine Innenverzahnungsschleifmaschine nach einem der vorangegangenen Ansprüche.
